Europäisches Patentamt

European Patent Office

Office européen des brevets

(11) Veröffentlichungsnummer: **0 269 607 B1**

(12) **EUROPÄISCHE PATENTSCHRIFT**

(45) Veröffentlichungstag der Patentschrift: 31.07.91

(51) Int. Cl.⁵: **G01M 15/00**

(21) Anmeldenummer: 87890243.6

(22) Anmeldetag: 03.11.87

(54) Diagnoseverfahren für mehrzylindrige Brennkraftmaschinen und Einrichtung zur Durchführung des Verfahrens.

(30) Priorität: 25.11.86 AT 3151/86

(43) Veröffentlichungstag der Anmeldung:
01.06.88 Patentblatt 88/22

(45) Bekanntmachung des Hinweises auf die
Patenterteilung:
31.07.91 Patentblatt 91/31

(84) Benannte Vertragsstaaten:
DE ES FR GB IT SE

(56) Entgegenhaltungen:
DE-A- 2 207 789
DE-B- 2 007 806
DE-B- 2 509 199
GB-A- 1 389 408

(73) Patentinhaber: AVL Gesellschaft für Verbrennungskraftmaschinen und Messtechnik
mbH.Prof.Dr.Dr.h.c. Hans List
Kleiststrasse 48
A-8020 Graz(AT)

(72) Erfinder: Lackner, Gerald, Dipl.-Ing.
Rudolf List Gasse 29
A-8010 Graz(AT)
Erfinder: Simbürger, Karl
Millöckergasse 6
A-8401 Kalsdorf(AT)

(74) Vertreter: Pinter, Rudolf, Dipl. Ing.
Fasangasse 49/22
A-1030 Wien(AT)

## Beschreibung

Die Erfindung betrifft ein Diagnoseverfahren für mehrzylindrige Brennkraftmaschinen, wobei Messungen von zylinderspezifischen Betriebskenngrößen der Brennkraftmaschine, insbesonders der relativen Kompression der einzelnen Zylinder, bei unterbundener Zündung durchgeführt und die dabei auftretenden Meßwerte den jeweiligen Zylindern zugeordnet werden, und wobei die Meßwerte während der unterbundenen Zündung fortlaufend numeriert werden, nach Aufhebung der Zündungsunterbindung diese Numerierung zumindest bis zum Auftreten des Meßwertes eines über die Zündung bestimmbaren Zylinders weitergeführt wird, und danach entsprechend der bekannten Zündfolge des Motors rückwirkend eine Zuordnung aller Meßwerte zu den Zylinder vorgenommen wird, sowie eine Einrichtung zur Durchführung des Verfahrens.

Die Messung von zylinderspezifischen Betriebskenngrößen einer Brennkraftmaschine steht immer wieder von dem Problem, daß die Zuordnung der gemessenen Größen zu den jeweiligen Zylindern Maßnahmen zur Ermöglichung einer eindeutigen Zylinderidentifikation erfordert, die jedoch nach Möglichkeit keinen nennenswerten zusätzlichen Aufwand bei der Vorbereitung und Durchführung der Messung erfordern sollen.

So sind im Zusammenhang mit Ottomotoren beispielsweise Verfahren bekannt, bei denen die Zuordnung von einzelnen, etwa über Schwankungen des Anlasserstromes gemessenen Kompressionswerten zu den jeweiligen Zylindern über eine Messung des Zündimpulses des ersten Zylinders - bei bekannter Zündfolge des Motors - erfolgt. Ein anderes bekanntes Verfahren zur Diagnose, welches insbesondere bei Dieselmotoren angewandt wird, verwendet an rotierenden Teilen des Kurbel- bzw. Nockentriebes angebrachte Marken zur Bestimmung des Zünd-OT (oberer Totpunkt im Bereich der Zündung bzw. zu Beginn des Arbeitstaktes) eines speziellen Zylinders.

Ein besonderes Problem stellt sich bei Diagnoseverfahren der genannten Art aber dann, wenn die Messung einerseits bei unterbundener Zündung durchgeführt werden muß und andererseits keinerlei Marken für den Zünd-OT oder einen ähnlichen Bezugspunkt eines definierten Zylinders an der zu prüfenden Brennkraftmaschine vorhanden sind. Im Zusammenhang mit der Untersuchung von Dieselmotoren ist ein Verfahren bzw. eine entsprechende Einrichtung bekannt geworden, bei dem bzw. der vor der Messung eine Reduzierung der Einspritzmenge von Hand auf ein Maß vorgenommen wird, das für ein Zünden der Brennkraftmaschine nicht ausreicht, jedoch andererseits noch einen nachweisbaren Einspritzimpuls auf einen auf die Einspritzleitung eines definierten Zylinders aufgeklemmten Sensor liefert. Es kommt dabei in nachteiliger Weise jedoch häufig entweder zum teilweisen Zünden der Brennkraftmaschine oder aber zum Ausfallen der für die eindeutige Zuordnung erforderlichen Triggerimpulse.

Aus der DE-OS 22 07 789 ist ein Verfahren bzw. eine Einrichtung der eingangs genannten Art bekannt geworden, wobei zur Sortierung der mit beliebigem Anfang anfallenden und entsprechend der Zündfolge abgespeicherten Meßwerte und Zuordnung zu den einzelnen Zylindern während eines ersten Zündfolgezyklus bei kurzgeschlossener Zündspule im Takt der Schließflanken des Unterbrechers aufeinanderfolgende Spitzenwerte der zu messenden zylinderspezifischen Betriebskenngröße in aufeinanderfolgende Zellen eines Analogwertspeichers gespeichert werden, während eines zweiten Zündfolgezyklus bei eingeschalteter Zündspule der erste auftretende Zündimpuls eines vorgegebenen Zylinders in die erste Stufe eines entsprechend ausgebildeten Ringzählers eingegeben und wobei weiters im Takt der Schließflanken dieser erste Zündimpuls bis zum Ende eines dritten Zündfolgezyklus weitergeschoben wird. Von der nach dem Ende des dritten Zündfolgezyklus markierten Stufe des Ringzählers ausgehend können dann die gespeicherten Meßwerte über einen zugeordneten Relaiswähler mittels des Ringzählers über ein entsprechend der geltenden Zündfolge programmiertes Schaltwerk seriell abgerufen werden. Dieses bekannte Verfahren bzw. die Einrichtung zu seiner Durchführung weist den Nachteil auf, daß einerseits der in der Praxis erforderliche Schaltungsaufwand relativ hoch ist und daß andererseits - was weit gravierender ist - für die richtige Zuordnung der Meßwerte die Markierung derselben auch während der unterdrückten Zündung bereits durch Detektion der Unterbrecherimpulse erfolgen muß, was zusätzlichen Aufwand bedeutet und darüber hinaus natürlich nicht bei allen Brennkraftmaschinen durchführbar ist.

Aufgabe der vorliegenden Erfindung ist es, ein Diagnoseverfahren der eingangs genannten Art bzw. eine entsprechende Einrichtung zur Durchführung eines derartigen Verfahrens so auszubilden, daß die genannten Nachteile der bekannten Verfahren und Einrichtungen nicht auftreten und daß insbesonders bei Messungen mit unterbundener Zündung und ohne Vorhandensein von Zünd-OT-Marken oder dergleichen eine eindeutige Zuordnung der gemessenen Größen zu den einzelnen Zylindern möglich ist.

Gemäß der Erfindung wird diese Aufgabe dadurch gelöst, daß bei einem Diagnoseverfahren der eingangs genannten Art die Numerierung der Meßwerte bei unterbundener Zündung jeweils über deren Signalpegel getriggert wird und daß für die Numerierung nach Aufhebung der Zündungsunterbindung fortlaufend den oberen Totpunkt im Bereich der Zündung bzw. zu Beginn des Arbeitstaktes charakterisierende Signale für jeden Zylinder bestimmt werden, wobei bei dieser Bestimmung das entsprechende Signal eines definierten Zylinders hervorgehoben wird. Ob die vorerst vorgenommene Numerierung der Meßwerte mit durchlaufenden Ziffern oder aber - entsprechend der tatsächlich gegebenen Zylinderanzahl der zu prüfenden Brennkraftmaschine - mit wiederkehrenden Ziffernfolgen vorgenommen wird ist an sich ebenso wie der Beginn der Numerierung belanglos. Es muß lediglich sichergestellt sein, daß die Numerierung solange fortgeführt wird, bis ein eindeutig über die Zündung - also etwa einen Impuls vom Zündkabel oder von der Einspritzleitung - bestimmbarer Zylinder bzw. dessen zugehöriges Meßsignal numeriert werden kann. Die anschließende rückwirkende Zuordnung kann dann unter Berücksichtigung der Zündfolge des Motors vorgenommen werden. Für die Numerierung bei unterbundener Zündung sind dabei außer den für die Aufnahme der Meßwerte erforderlichen Anschlüssen keinerlei weitere Vorkehrungen an der Brennkraftmaschine notwendig.

Soferne - was prinzipiell denkbar wäre - nur an einem definierten Zylinder Maßnahmen zu seiner Identifikation über die Zündung (bzw. Einspritzung) vorgesehen würden, könnten Probleme dahingehend auftreten, daß nach Aufhebung der Zündungsunterbindung und Einsetzen des normalen Betriebs der Brennkraftmaschine die charakteristische und unterscheidbare Welligkeit in der gemessenen Größe verschwindet, sodaß beim nächsten Auftreten des charakteristischen Triggersignals des einzelnen definierten Zylinders keine eindeutige rückwirkende Zuordnung der Meßwerte mehr möglich wäre. Insbesondere Nachteile könnten in diesem Zusammenhang natürlich bei Brennkraftmaschinen mit vielen Zylindern auftreten, da für den Fall, daß die Zündungsunterbindung kurz nach dem Ansprechen des einzeln gekennzeichneten Zylinders aufgehoben wird, unter Umständen schon einer der nächsten Zylinder als erster zünden kann, sodaß die charakteristische Welligkeit beispielsweise der bei unterbundener Zündung über die Schwankungen des Anlasserstroms gemessenen relativen Kompression der einzelnen Zylinder schon lange verschwunden ist, bevor der definierte Einzelzylinder wieder an die Reihe kommt. Gemäß der Erfindung ist dieser Nachteil mit Sicherheit vermieden, da auch für den Fall nicht mehr einzeln unterscheidbarer Meßwerte nach Aufhebung der Zündungsunterbindung fortlaufend weiterhin numeriert werden kann. Die Hervorhebung des entsprechenden Signals eines definierten Zylinders kann dabei entweder durch separate Betrachtung bzw.

Zuführung desselben zu einer Auswerteeinheit oder dergleichen erfolgen; es kann aber auch durch Bestimmung bzw. Überwachung einer zusätzlichen Größe diese Hervorhebung für einen definierten Zylinder vorgenommen werden.

Gemäß einer weiteren vorteilhaften Ausgestaltung der Erfindung kann bei Diesel-Brennkraftmaschinen auch vorgesehen sein, daß die den oberen Totpunkt im Bereich der Zündung bzw. zu Beginn des Arbeitstaktes charakterisierenden Signale mittels Einspritzsensoren, insbesonders Aufklemmgebern für die Einspritzleitungen oder Bewegungssensoren für die Düsennadeln, ermittelt werden. Auf diese Weise ist die Durchführung des Diagnoseverfahrens sehr vereinfacht, da die Verwendung der genannten Sensoren für verschiedene Meßzwecke bekannt und üblich ist und somit keinerlei neue oder zusätzliche Anordnungen bzw. Kenntnisse notwendig sind.

Eine Einrichtung zur Diagnose von mehrzylindrigen Brennkraftmaschinen, mit einer mit einer Brennkraftmaschine verbindbaren Anordnung zur Messung von zylinderspezifischen Betriebskenngrößen der Brennkraftmaschine, insbesonders einer Anordnung zur Bestimmung der relativen Kompression der einzelnen Zylinder über die Schwankungen in der Stromaufnahme eines Anlassers, einer Einheit zur aufhebbaren Unterbindung der Zündung, insbesonders einer Einheit zur Unterdrückung der Förderung der Einspritzpumpe bei einer Diesel-Brennkraftmaschine, einer mit der Anordnung und der Einheit verbundenen Auswerteeinheit, und einer mit dieser in Verbindung stehenden Zuordnungseinheit, ist nach einem weiteren Vorschlag der Erfindung so ausgebildet, daß die Zuordnungseinheit eine Komparatoreinheit zur Triggerung einer Numerierung der Meßwerte der zylinderspezifischen Betriebskenngrößen bei unterbundener Zündung über deren Signalpegel, sowie für jeden Zylinder einen nach Aufhebung der Zündungsunterbindung Signale an die Auswerteeinrichtung abgebenden Zünd-OT-Sensor zur Feststellung des oberen Totpunktes im Bereich der Zündung bzw. zu Beginn des Arbeitstaktes aufweist, und daß ein, einem definierten Zylinder zugeordneter dieser Sensoren so ausgebildet bzw. angeschlossen ist, daß er in der Auswerteeinheit von den anderen Sensoren unterscheidbare Signale liefert.

Diese genannten Zünd-OT-Sensoren können nach einer vorteilhaften Weiterbildung der Erfindung von Einspritzsensoren gebildet sein, von denen der dem definierten Zylinder, vorzugsweise dem Zylinder 1, zugeordnete an einer separaten Buchse der Auswerteeinrichtung angeschlossen ist. Auf diese Weise ist sichergestellt, daß nach dem Aufheben der Zündungsunterbindung und damit mehr oder weniger raschen Aufhören der zylinderspezifischen Amplitudenschwankungen der gemessenen Größe, eine Fortnumerierung der einzelnen Zylinder bis zum Ansprechen des einem definierten Zylinder zugeordneten Sensors möglich bleibt. Abgesehen von der genannten Möglichkeit, den dem definierten Zylinder zugeordneten Sensor durch Anschluß an einer separaten Buchse der Auswerteeinrichtung zu erkennen, könnte dieser natürlich auch auf verschiedene andere Weise markiert werden, so etwa über deutlich unterscheidbare Signalamplituden oder auch über einen zusätzlichen Signalimpuls eines anderen Sensors.

Zu erwähnen ist an dieser Stelle, daß einzelne Elemente der erfindungsgemäßen Einrichtung auch zumindest teilweise software-mäßig realisiert sein können, soferne dies günstig erscheint.

Die Erfindung wird im folgenden anhand der Zeichnung näher erläutert.

Fig. 1 zeigt ein Diagramm des Anlasserstroms i über der Zeit t, aufgenommen an einer Vierzylinder-Brennkraftmaschine zur Beurteilung der relativen Kompression der einzelnen Zylinder und

Fig. 2 zeigt ein Blockschaltbild einer beispielhaften Einrichtung zur Durchführung des Diagnoseverfahrens nach der Erfindung.

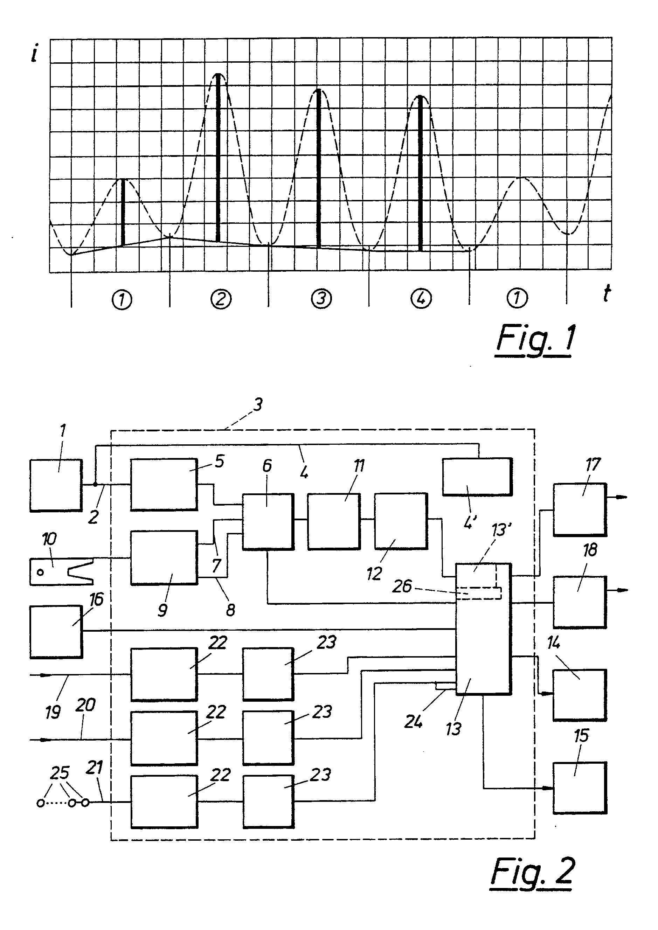

In der Darstellung der Fig. 1 sind die Stromschwankungen des Anlasserstroms einer nicht weiter dargestellten, zu prüfenden Vierzylinder-Brennkraftmaschine zu ersehen. Die Zylinder sind mit in Kreisen gesetzten Nummern bezeichnet. Es ist ersichtlich, daß die relative Kompression des ersten Zylinders gegenüber den anderen Zylindern zurückbleibt, was verschiedenste, hier nicht näher interessierende Ursachen haben kann.

Anhand des Blockschaltbilds der Fig. 2 soll die Aufnahme und Auswertung des Diagramms nach Fig. 1 erläutert werden. An einer Batterie 1 ist auf hier nicht dargestellte Weise der Anlasser einer hinsichtlich der relativen Kompression der einzelnen Zylinder zu prüfenden Brennkraftmaschine angeschlossen. Über eine Leitung 2 steht die Batterie 1 mit einem Meßgerät 3 in Verbindung, welches über eine Einheit 4' und eine Leitung 4 von der Batterie 1 mit Spannung versorgt wird. Über eine Signalaufbereitung 5 kann ein der Batteriespannung proportionales Signal einem Multiplexer 6 zugeführt werden. Dieser ist über Leitungen 7, 8 mit einer weiteren Signalaufbereitung 9 verbunden, welche von einer Strommeßzange 10 mit einem dem Anlasserstrom entsprechenden Signal versorgt werden kann. Über den Multiplexer 6 kann dabei die Auswahl des jeweils gewünschten Signals vorgenommen werden, welches dann über ein Abtastglied 11 und einen nachgeschalteten Analog-Digitalwandler 12 einer Auswerteeinheit 13 zur Verarbeitung zugeführt wird.

Die Auswerteeinheit 13 - welche beispielsweise von einem Mikroprozessor gebildet sein kann - umfaßt in der dargestellten Ausführung auch eine Korrektureinheit 13', welche eine Berücksichtigung der Strom/Drehzahl-Charakteristik des Anlassers ermöglicht. Dadurch können die bei derartigen Kompressionsmessungen zu beobachtenden systematischen Fehler ausgeglichen werden, welche ansonsten die relativen Kompressionsunterschiede der einzelnen Zylinder stark verzerren und schlüssige diesbezügliche Aussagen erschweren.

Weiters umfaßt die Auswerteeinheit 13 in der dargestellten Ausführung eine der später noch angesprochenen Zuordnungseinheit zuzurechnende Komparatoreinheit 26 zur Triggerung der Numerierung der Meßwerte bei unterbundener Zündung über den Signalpegel der Meßwerte.

An der Auswerteeinheit 13 ist seitlich eine Anzeigeeinheit 14, beispielsweise ein LC-Display, und ein Drucker 15 zur Ausgabe der Meßwerte angeschlossen. Auf diesen Anzeigen können neben den relativen Kompressionswerten der einzelnen Zylinder der geprüften Brennkraftmaschine beispielsweise auch Starterdrehzahl, Mittelwert des Stromes, Mittelwert der Spannung, Welligkeiten, usw. angezeigt werden.

Ebenfalls mit der Auswerteeinheit 13 in Verbindung steht eine Bedieneinheit 16, über welche die verschiedenen Arbeitsweisen der Einrichtung bzw. des Meßgeräts gesteuert werden können.

Die Unterdrückung der Zündung bei Ottomotoren kann über eine Einheit 17 auf entsprechenden Befehl der Auswerteeinheit 13 hin durchgeführt werden. An der nicht weite dargestellten Brennkraftmaschine müßte dazu nur ein Anschluß an der Unterbrecherklemme vorgenommen werden.

Zur Unterdrückung der Einspritzung bei Dieselmotoren kann beispielsweise das Schließen des Magnetventils der Einspritzpumpe über eine Einheit 18 herbeigeführt werden. An der zu prüfenden Brennkraftmaschine kann dazu beispielsweise die Steuerleitung zum Magnetventil aufgetrennt und durch die Einheit 18 durchgeschlieft werden.

Zur Zylinderidentifikation, also zur Zuordnung der beispielsweise gemäß Fig. 1 aufgenommenen zylinderspezifischen Meßwerte zu den tatsächlich verursachenden Zylindern, können der Auswerteeinheit 13 im Falle eines zu prüfenden Ottomotors über eine Leitung 19 z.B. Signale eines nicht weiter dargestellten kapazitiven Sensor zugeführt werden, der auf das Zündkabel beispielsweise des ersten Zylinders aufgeklemmt wird. In Brennkraftmaschinen mit für den Einsatz von OT-Sensoren vorbereiteten entsprechenden Marken kann einer dieser über die Leitung 20 angeschlossen werden, der in Verbindung beispielsweise mit einem Aufklemmsensor an einer Einspritzleitung eine Zylinderidentifikation erlaubt.

Im Falle der Messung an Dieselmotoren ohne irgendwelche OT-Marken bzw. OT-Sensoren werden zur Zylinderidentifikation die Signale von schematisch dargestellten, beispielsweise auf die Einspritzleitungen der zu prüfenden Brennkraftmaschine aufgeklemmten und deren Umfangsvergrößerung während des Einspritzvorganges detektierenden Sensoren 25 nach entsprechender Aufbereitung der Auswerteeinheit 13 zugeführt. Anstelle der genannten aufgeklemmten Sensoren können aber auch induktive bzw. mit Hall-Effekt arbeitende Nadelbewegungsgeber an jedem Zylinder vorgesehen werden. Wesentlich ist dabei nur, daß die über die Anschlüsse 21 verbundenen Sensoren 25 jedes Zylinders für dessen Zünd-OT charakteristische Signale abgeben. Einer dieser über die Leitungen 21 angeschlossenen Sensoren, der einem definierten Zylinder - etwa dem ersten Zylinder - zugeordnet ist, ist so ausgebildet bzw. angeschlossen, daß er ein in der Auswerteeinheit von den anderen Sensoren unterscheidbares Signal liefert. Dies kann beispielsweise dadurch geschehen, daß dieser hervorzuhebende Sensor an einer separaten Buchse - angedeutet mit 24 - der Auswerteeinheit 13 angeschlossen ist. Die Sensoren 25 samt Leitungen 21, Signalaufbereitung 22 und Impulsformer 23 bilden dabei eine, bereits im Zusammenhang mit der auch zu dieser gehörigen Komparatoreinheit 26 angesprochene, Zuordnungseinheit, die mit der Auswerteeinheit 13 in Verbindung steht, bzw. teilweise in dieser integriert ist, und die Zuordnung der gemessenen Größen zu den jeweiligen Zylindern auf beschriebene Weise erlaubt.

Der Meßablauf mit der dargestellten Einrichtung läßt sich kurz wie folgt beschreiben: Die Zündung der zu prüfenden Brennkraftmaschine (nicht dargestellt) wird je nach Typ über die Einheit 17 oder die Einheit 18 unterdrückt - soferne dies beispielsweise bei Dieselmotoren nicht möglich ist, kann auch eine Einstellung auf Nullförderung von Hand vorgenommen werden. Während des anschließenden Anlaßvorganges wird nach Erreichen der stabilen Anlasserdrehzahl entweder der Anlasserstrom i - wie in Fig. 1 dargestellt - oder aber die Batteriespannung gemessen, wobei gleichzeitig beim Ansprechen der Komparatoreinheit 26, die - was im übrigen auch für die anderen Elemente der erfindungsgemäßen Einrichtung gilt - auch zumindest teilweise software-mäßig realisiert sein kann, die Amplituden der auftretenden Welligkeit numeriert werden. Sobald für die Auswertung ausreichend viele Zyklen abgetastet sind, wird die Unterdrückung der Zündung über die Auswerteeinheit 13 aufgehoben und die genannten Sensoren 25 geben ihre jeweils dem Zünd-OT zugeordneten Signale ab. Mit diesen Signalen wird die Numerierung der den einzelnen Zylindern zugehörigen Amplituden fortgesetzt bis zum Auftreten des Signals jenes Sensors, der dem definierten Zylinder zugeordnet ist. Bei bekannter Zylinderanzahl und Zündfolge können sodann die aufgenommenen Stromamplituden gemäß Fig. 1 den einzelnen Zylindern rückwirkend zugeordnet werden.

## Patentansprüche

1. Diagnoseverfahren für mehrzylindrige Brennkraftmaschinen, wobei Messungen von zylinderspezifischen Betriebskenngrößen der Brennkraftmaschine, insbesonders der relativen Kompression der einzelnen Zylinder, bei unterbundener Zündung durchgeführt und die dabei auftretenden Meßwerte den jeweiligen Zylindern zugeordnet werden, und wobei die Meßwerte während der unterbundenen Zündung fortlaufend numeriert werden, nach Aufhebung der Zündungsunterbindung diese Numerierung zumindest bis zum Auftreten des Meßwertes eines über die Zündung bestimmbaren Zylinders weitergeführt wird, und danach entsprechend der bekannten Zündfolge des Motors rückwirkend eine Zuordnung aller Meßwerte zu den Zylindern vorgenommen wird, **dadurch gekennzeichnet**, daß die Numerierung der Meßwerte bei unterbundener Zündung jeweils über deren Signalpegel getriggert wird und daß für die Numerierung nach Aufhebung der Zündungsunterbindung fortlaufend den oberen Totpunkt im Bereich der Zündung bzw. zu Beginn des Arbeitstaktes charakterisierende Signale für jeden Zylinder bestimmt werden, wobei bei dieser Bestimmung das entsprechende Signal eines definierten Zylinders hervorgehoben wird.

2. Diagnoseverfahren nach Anspruch 1 für Diesel-Brennkraftmaschinen, dadurch gekennzeichnet, daß die den oberen Totpunkt im Bereich der Zündung bzw. zu Beginn des Arbeitstaktes charakterisierenden Signale mittels Einspritzsensoren (25), insbesonders Aufklemmgebern für die Einspritzleitungen oder Bewegungssensoren für die Düsennadeln, ermittelt werden.

3. Einrichtung zur Diagnose von mehrzylindrigen Brennkraftmaschinen, mit einer mit einer Brennkraftmaschine verbindbaren Anordnung zur Messung von zylinderspezifischen Betriebskenngrößen der mehrzylindrigen Brennkraftmaschine, insbesonders einer Anordnung (10) zur Bestimmung der relativen Kompression der einzelnen Zylinder über die Schwankungen in der Stromaufnahme eines Anlassers, einer Einheit (17,18) zur aufhebbaren Unterbindung der Zündung, insbesonders einer Einheit (18) zur Unterdrückung der Förderung der Einspritzpumpe bei einer Diesel-Brennkraftmaschine, einer mit der Anordnung (10) und der Einheit (17,18) verbundenen Auswerteeinheit (13), und einer mit dieser in Verbindung stehenden Zuordnungseinheit, **dadurch gekennzeichnet**, daß die Zuordnungseinheit eine Komparatoreinheit (26) zur Triggerung einer Numerierung der Meßwerte der zylinderspezifischen Betriebskenngrößen bei unterbundener Zündung über deren Signalpegel, sowie für jeden Zylinder einen nach Aufhebung der Zündungsunterbindung Signale an die Auswerteeinrichtung (13) abgebenden Zünd-OT-Sensor (25) zur Feststellung des oberen Totpunktes im Bereich der Zündung bzw. zu Beginn des Arbeitstaktes aufweist, und daß ein, einem definierten Zylinder zugeordneter dieser Sensoren (25) so ausgebildet bzw. angeschlossen ist, daß er in der Auswerteeinheit (13) von den anderen Sensoren unterscheidbare Signale liefert.

4. Einrichtung nach Anspruch 3, dadurch gekennzeichnet, daß die Zünd-OT-Sensoren (25) von Einspritzsensoren gebildet sind, von denen der dem definierten Zylinder, vorzugsweise dem Zylinder 1, zugeordnete an einer separaten Buchse (24) der Auswerteeinrichtung (13) angeschlossen ist.

## Claims

1. Diagnostic method for multi-cylinder internal combustion engines, measurements of cylinder-specific operating characteristic magnitudes of the engine, in particular of the relative compression of the individual cylinders, being carried out with the ignition suppressed and the resulting measured values being associated with the respective cylinders, and the measured values being continuously counted during the period of suppression of the ignition, and this counting being continued after termination of the suppression of the ignition at least until the occurrence of the measured value of a cylinder which is determinable through the ignition, an allocation of all the measured values to the cylinders then being undertaken retrospectively, in accordance with the known firing order of the engine, characterised in that the counting of the measured values with the ignition suppressed is triggered respectively through its signal level and that for the counting after cessation of the suppression of the ignition signals are determined continuously for each cylinder characterising the TDC in the region of the firing point or at the beginning of the working stroke, the corresponding signal of a selected cylinder being identified by this determination.

2. Diagnostic method according to claim 1 for diesel engines characterised in that the signals characterising the TDC in the region of the ignition point or at the start of the working stroke are determined by means of injection sensors (25), in particular clamp-on transmitters for the injection pipes or movement sensors for the injection needles.

3. Apparatus for diagnosing multi-cylinder internal combustion engines with an arrangement which can be connected to the engine for measuring cylinder-specific characteristic operating magnitudes of the multi-cylinder engine, in particular an arrangement (10) for determining the relative compression of the individual cylinders through the variations in the current consumption of a starter motor, a unit (17, 18) for terminable suppression of the ignition, in particular a unit (18) for suppressing the delivery of the injection pump in a diesel engine, an evaluating unit (13) connected to the arrangement (10) and the unit (17,18) and an allocation unit connected to it, characterised in that the allocation unit comprises a comparator unit (26) for triggering counting the measured values of the cylinder-specific characteristic operating magnitudes with the ignition suppressed over its signal level, and for each cylinder a firing point TDC sensor (25) delivering signals to the evaluating device (13) after termination of the suppression of the ignition for determining the TDC around the firing point or the start of the working stroke, and that one of these sensors (25) associated with a selected cylinder is constructed or connected in such a way that it delivers to the evaluating unit (13) signals which differ from the other sensors.

4. Apparatus according to claim 3 characterised in that the firing-point TDC sensors (25) are formed by injection sensors of which the one associated with the selected cylinder, preferably cylinder 1, is connected to a separate socket (24) on the evaluating device (13).

## Revendications

1. Procédé de diagnostic pour moteurs à combustion interne à plusieurs cylindres, dans lequel on effectue des mesures de grandeurs caractéristiques fonctionnelles spécifiques aux cylindres, en particulier du taux de compression des différents cylindres, lorsque l'allumage est mis hors service, et dans lequel les valeurs de mesure obtenues sont associées aux différents cylindres, les valeurs de mesure étant numérotées en continu pendant la mise "hors service" de l'allumage, dans lequel également cette numérotation est reprise une fois terminée la mise "hors service" de l'allumage, au moins jusqu'à apparition de la valeur de mesure d'un cylindre définissable via l'allumage, et l'association de toutes les valeurs de mesure aux cylindres étant effectuée ensuite rétroactivement, en fonction de la connaissance que l'on a de l'ordre de succession des allumages, caractérisé en ce que la numérotation des valeurs de mesure, une fois l'allumage mis hors service, est chaque fois déclenchée par son niveau de signal et que, pour procéder à la numérotation, une fois supprimée la mise hors service de l'allumage, on détermine en continu, pour chaque cylindre, des signaux qui caractérisent le point mort haut dans la zone de l'allumage ou, au début du cycle, le signal correspondant à un cylindre défini étant mis en évidence lors de cette détermination.

2. Procédé de diagnostic selon la revendication 1, pour moteurs à combustion interne de type Diesel, caractérisé en ce que les signaux qui caractérisent le point mort haut dans la zone de l'allumage et au début du cycle de travail, sont obtenus au moyen de capteurs d'injection (25), en particulier de capteurs d'efforts de bridage ou serrage pour les conduites d'injection, ou de capteurs de déplacement pour les aiguilles d'injecteur.

3. Appareil de diagnostic de moteurs à plusieurs cylindres, avec un dispositif susceptible d'être relié à un moteur à combustion interne, en vue de mesurer des grandeurs caractéristiques de fonctionnement spécifiques aux cylindres du moteur à combustion interne à plusieurs cylindres, en particulier avec un dispositif (10) servant à déterminer le taux de compression des différents cylindres, en fonction des fluctuations de consommation électrique d'un démarreur, avec une unité (17, 18) servant à stopper l'allumage, de manière interruptible, à affaiblir, par une unité (18), le refoulement de la pompe d'injection dans le cas d'un moteur à combustion interne de type Diesel, avec une unité d'évaluation (13) reliée au dispositif (10) et à l'unité (17, 18), et avec une unité associée en relation avec celle-ci, caractérisé en ce que cette dernière unité associée comporte une unité de comparaison (26) pour déclencher une numérotation des valeurs mesurées des grandeurs caractéristiques de fonctionnement, lorsque l'allumage est mis hors service, au-dessus de leur niveau de signal, ainsi que, pour chaque cylindre, un capteur allumage-PMH (25), qui envoie des signaux au dispositif d'évaluation (13), une fois cessée la mise hors service de l'allumage, en vue de déterminer le point mort haut dans la zone de l'allumage, ou encore au début du cycle de travail, et en ce que l'un de ces capteurs (25), associé à un cylindre défini, est conçu ou est inclus de telle façon qu'il envoie dans l'unité d'évaluation/exploitation (13) des signaux distincts des autres capteurs.

4. Appareil de diagnostic selon la revendication 3, caractérisé en ce que les capteurs allumage-PMH (25) sont formés par des capteurs d'injection dont celui qui est associé au cylindre défini, de préférence le cylindre numéro 1, est raccordé à une fiche séparée (24) du dispositif d'évaluation (13).

EP 0 269 607 B1

*Fig._1*

*Fig._2*

8